# EUROPEAN PATENT APPLICATION

(11) **EP 1 213 668 A1**
(43) Date of publication of application: **12.06.2002**
(21) Application number: 01128460.1
(22) Date of filing: 05.12.2001
(51) Int. Cl.: G06F 17/40, G05B 23/02

(54) **Production plant for making and packing articles**

(30) Priority: 06.12.2000 IT BO000711
(71) Applicant: G.D SOCIETA' PER AZIONI, 40133 Bologna (IT)
(72) Inventor: Bergo, Daniele, 40137 Bologna (IT); Ravelli, Paolo, 38020 Mezzano (IT); Spatafora, Mario, 40100 Bologna (IT)
(74) Representative: Franzolin, Luigi

(57) **Abstract**

Production plant featuring automatic making and packing machines (2), each of which has a relevant control unit (3); a collection computer (9) awaits receipt of information packages (P) transmitted independently and asynchronously by the control units over a first communication network (5; 8); and the collection computer (9) organizes and processes the information packages (P) received from the control units (3) to generate overall data (D) accessible over a second communication network (8), with respect to which the collection computer (9) acts as a server.

## Description

The present invention relates to plant for making and packing articles.

In particular, the present invention may be used to advantage in cigarette manufacturing and packing plants, to which the following description refers purely by way of example.

Known cigarette manufacturing and packing plants comprise a number of automatic machines, each of which performs a specific function closely related to those of the other machines, and normally features a control unit for controlling all the operating and monitoring devices on the machine to process and memorize data relative to operation of the machine as a whole.

For some time now, a need has been felt to collect and process centrally at least some of the data on each control unit to monitor operation of the plant as a whole.

The data collection system currently used in known cigarette manufacturing and packing plants comprises one or more collection computers, which interrogate the control unit of each automatic machine cyclically to acquire given data from the control unit.

Known data collection systems of the above type have several drawbacks. Firstly, by interrogating the control unit of each automatic machine cyclically, the collection computer may attempt to communicate with the control unit while it is engaged in other functions, thus seriously impairing the efficiency of the control unit. Secondly, for data to be updated relatively quickly to permit immediate evaluation of any events seriously affecting the efficiency of one or more machines, the control units must be interrogated frequently by the collection computer, thus resulting in heavy traffic over the communication networks. And thirdly, the communication software employed by each control unit is considerable and relatively complex by having to respond to data inquiries from the collection computer at all times.

It is an object of the present invention to provide a production plant data collection method designed to eliminate the aforementioned drawbacks, and which, at the same time, is cheap and easy to implement.

According to the present invention, there is provided a production plant for making and packing articles as recited by Claim 1.

A non-limiting embodiment of the present invention will be described by way of example with reference to the accompanying drawings, in which:
Figure 1 shows a schematic of a production plant implementing the data collection method according to the present invention;
Figure 2 shows a block diagram of the software employed in a data collection system in the Figure 1 production plant.

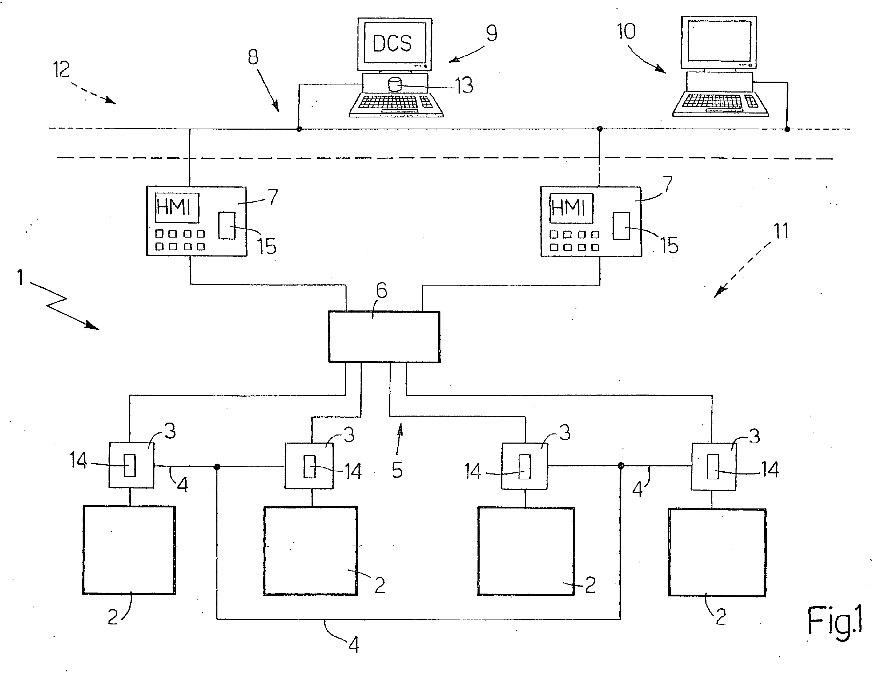

Number 1 in Figure 1 indicates as a whole a cigarette manufacturing and packing plant comprising a number of automatic machines 2 (only four of which are shown schematically in Figure 1), each performing a specific function closely related to those of the other machines 2. By way of example, automatic machines 2 comprise manufacturing machines, filter assembly machines, packing machines, cellophaning machines, cartoning machines, boxing machines, stores and conveyors.

Each automatic machine 2 has a control unit 3 for controlling all the operating and monitoring devices (not shown) of automatic machine 2 to process and memorize data relative to operation of automatic machine 2 as a whole.

Each control unit 3 is connected directly to the other control units 3 by a field bus 4 permitting extremely fast data exchange between control units 3, and is connected to an Ethernet (preferably TCP/IP protocol) communication network 5 by a known switch device 6.

A number of so-called "HMI" user interface devices 7 (only two shown schematically in Figure 1) are also connected to communication network 5 by switch device 6. Defined by a respective industrial computer, each user interface device 7 allows an operator to interact with one or more control units 3 over communication network 5; defines a monitoring unit for monitoring a respective automatic machine; and is also connected to a Fast-Ethernet (preferably TCP/IP protocol) communication network 8, to which are connected a collection computer 9 and a number of computers 10 (only one shown schematically in Figure 1).

Machines 2, communication network 5, control units 3 and user interface devices 7 are installed in a production area 11, and must therefore be suitably protected against external agents (dust, dirt, mechanical stress, damp, etc.) present in area 11, to ensure reliable, long-term operation.

Most of communication network 8, collection computer 9 and computers 10, on the other hand, are installed in an office area 12, and therefore do not require any special protection against external agents.

In actual use, at least one user interface device 7 is supplied over communication network 8 and cyclically by control units 3 with data relative to operation of the corresponding automatic machines 2, and organizes the incoming data from control units 3 into information packages P.

Each package P is transmitted independently and asynchronously by user interface device 7 to collection computer 9 at the discretion of user interface 7. In other words, information packages P are transmitted between user interface device 7 and collection computer 9 according to a master/slave system, in which collection computer 9 is the slave, so that communication over communication network 8 is one-way and originated exclusively by user interface device 7.

Each user interface device 7 assigns each respective information package P a recognition code by which to recognize the automatic machine 2 supplying the information in the package, and to allow collection computer 9 to determine unequivocally the origin of each information package P.

Collection computer 9 receives the various information packages P transmitted independently and asynchronously by interface devices 7, and processes, organizes and memorizes the incoming information packages P to generate overall production plant data D reorganized for each automatic machine 2 and production complex.

Data D is memorized by the collection computer in an SQL-standard relational database 13, and is made available to computers 10 on communication network 8. More specifically, collection computer 9 is equipped with application software connected to relational database 13 and which is present on communication network 8 in the form of a Web Server that can be interrogated according to the Internet/Intranet standard.

Each computer 10 thus has easy access to the overall data D available on collection computer 9. Each computer 10 on network 8, in fact, need simply be equipped with a standard commercial browser program, and make a straightforward request for connection to the Web Server on collection computer 9 to gain access to the overall data D stored in collection computer 9.

To ensure the safety and full availability of the data in each control unit 3 and each interface device 7, even in the absence of communication network 5, each control unit 3 has a respective buffer memory 14 for storing data relative to operation of the respective automatic machine 2. More specifically, each memory 14 comprises two identical, independent banks (not shown), which are used sequentially by means of a hardware or software switching device (not shown) to store data relative to the last two work shifts. In addition to buffer memory 14, control unit 3 also comprises a bulk memory (not shown and typically defined by a hard disk) for cyclically memorizing and preventing loss of the data in respective buffer memory 14 in the event user interface device 7 is prevented from communicating with control unit 3 for a prolonged period of time.

Similarly, each user interface device 7 has a respective buffer memory 15 for memorizing all the data received and processed cyclically by control units 3. More specifically, each memory 15 comprises three identical, independent banks (not shown) which are used sequentially by means of a hardware or software switching device (not shown) to store data relative to the last three work shifts. In addition to buffer memory 15, user interface device 7 also comprises a bulk memory (not shown and typically defined by a hard disk) for cyclically memorizing and preventing loss of the data in respective buffer memory 15 in the event the user interface device 7 is prevented from exchanging information packages P with collection computer 9 (e.g. due to interruption of communication network 8).

Each information package P contains information relative to operation of one automatic machine 2, and in particular contains, for the corresponding automatic machine 2, a series of format data FD and a series of statistical data SD.

The format data FD describes the machine type and model and the type and format of the product being produced. The statistical data SD is divided into four categories: performance data summarizing performance of the machine (in absolute and percentage values); production data or machine counters (in absolute and percentage values); machine downtime statistics, which summarize machine downtime according to the number of stoppages and total downtime; and machine downtime history, which is a chronological list of machine downtime events, including start, duration and cause information.

By way of example, performance data may comprise items such as: machine-off time; setup time; external stop time (i.e. total stop time caused by factors not involving the machine); internal stop time (i.e. total stop time caused by factors on the machine); running time; production time (i.e. the time the machine is actually producing); standby time; peak running time; average running time; material wait time (i.e. the total time the machine, though running, is not producing); theoretical production; actual production; rejects; production shortage; rated speed (product units/minute); number of stoppages; efficiency; utilization; and brand.

By way of example, production data may comprise items such as: theoretical production; actual production (in absolute and percentage values); production shortage (in absolute and percentage values); and rejects.

In addition to the above functions of receiving and making overall production plant data D available to computers 10, collection computer 9 also centralizes various support services for production plant 1, to perform which, collection computer 9 transmits control packages P1 to user interface devices 7 by means of a master/slave communication system in which collection computer 9 is the master. Control packages P1 are only transmitted by collection computer 9 occasionally or in the case of events of particular interest, and therefore have substantially no effect on operation of the control unit 3 or interface device 7 to which they are transmitted.

Particularly important are the control packages P1 by which the collection computer periodically synchronizes the date and time of control units 3 and the respective work' shifts. Such synchronization is particularly important by allowing collection computer 9 to group and compare data from distinct, substantially independent control units 3 and/or interface devices 7 to correlate distinct production complexes.

For each control unit 3 and each user interface device 7, collection computer 9 keeps a complete copy of management software and configuration parameters.

Whenever changes are made to the management software and/or configuration parameters (normally following updating or adjustment of automatic machine 2), the copy on collection computer 9 is updated automatically by the control unit 3 and/or user interface device 7 concerned over communication network 8. In the event of a serious breakdown involving replacement of a control unit 3 or user interface device 7, therefore, the plant can be restored immediately to full working order by simply installing the new hardware and ordering collection computer 9 to transfer the software and configuration parameters from the old to the new hardware.

Similarly, collection computer 9 stores, for each user interface device 7, a copy of each display element (text or image) by which the operator interacts with the respective automatic machine. Upon request, collection computer 9 can update even only one display element, e.g. if considered graphically obsolete, to ensure continuous graphic development and increasingly easy use of each user interface. Collection computer 9 can also be connected - over communication network 8 or by a respective modem, e.g. using the Internet network - to a server (not shown) of the maker of automatic machines 2, to receive telematically an updated version of the management software of each control unit 3 and each user interface device 7 in production plant 1, so that, if updated software versions are available, collection computer 9 is capable of automatically updating the management software of each control unit 3 and each user interface device 7.

Collection computer 9 uses communication network 8 to report any important events, by means of electronic mail messages, to a given group of computer 10 users. Such events may comprise routine maintenance or repairs to be carried out on automatic machines 2; machine stoppages caused by particularly serious breakdowns; or requests for spare parts. In the same way, the collection computer transmits machine operator information to interface devices 7, which display the information in the appropriate graphic form.

All the electronic mail messages generated by collection computer 9 - particularly those relating to spare parts or serious breakdowns - may also be transmitted automatically by collection computer 9 to the maker of automatic machines 2.

Given the overall production plant 1 operating data D stored in collection computer 9 and the other services provided, collection computer 9 may advantageously be integrated into the information management system of production plant 1.

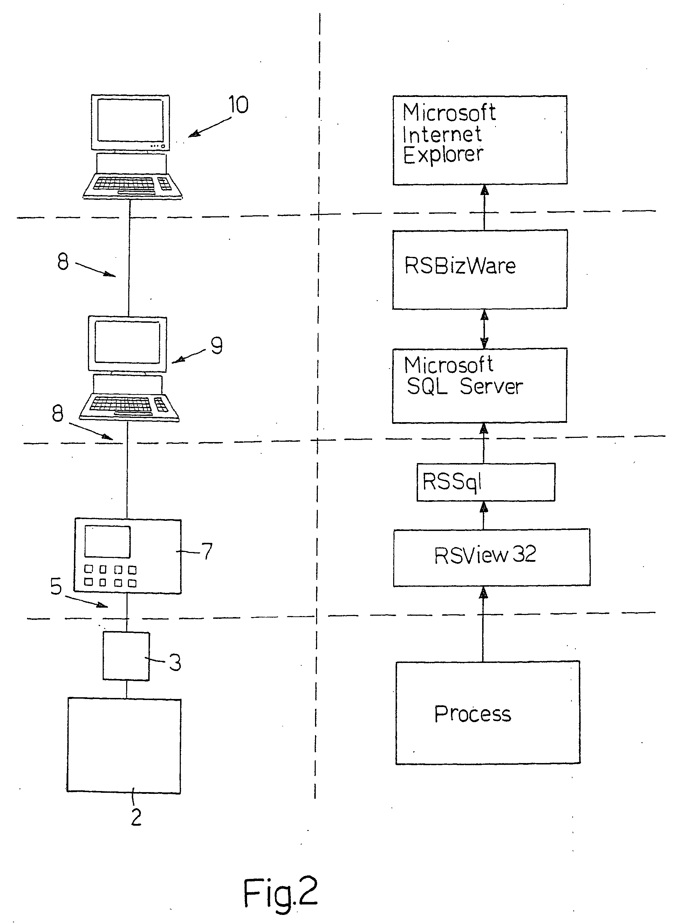

In a preferred embodiment shown in Figure 2, a user interface device 7 receives data from control units 3 by means of an RSView32 software package (registered trademark) and transmits the information packages P to collection computer 9 by means of an RSSql software package (registered trademark); database 13 is implemented in collection computer 9 by a Microsoft SQL Server software package (registered trademark); and the Web Server is implemented by an RSBizWare software package (registered trademark) which permits Internet/Intranet consultation of database 13 by a Web Client implemented in computer 10 by a Microsoft Internet Explorer software package (registered trademark).

As described above, each computer 10 and collection computer 9 are located outside production plant 1; communication network 8 comprises one network; and each computer 10 accesses production plant data via collection computer 9. Theoretically, however, a computer 10 could interrogate an interface device 7 without going through collection computer 9. In a further embodiment not shown, to ensure each computer 10 is only allowed access to production plant 1 data via collection computer 9, communication network 8 comprises two physically distinct communication networks : a first for connecting interface devices 7 to collection computer 9; and a second for connecting collection computer 9 to computers 10.

In a further embodiment not shown, collection computer 9 is located in production area 11 and connected on one side to communication network 5 and on the other to communication network 8. In this case, collection computer 9 communicates with each control unit 3, from which it receives information packages P, containing data relative to operation of the corresponding automatic machines 2, without employing user interface devices 7. Such an embodiment, in which each control unit 3 defines a monitoring unit, is particularly advantageous when using highly straightforward, low-cost user interface devices 7.

In a further embodiment not shown, collection computer 9 is dispensed with and its functions are performed by a user interface device 7 supplied by each control unit 3 with information packages P containing data relative to operation of the corresponding automatic machines 2. In this case, each control unit 3 defines a monitoring unit; and user interface device 7 processes and organizes the information packages P received from control units 3 to generate overall data D, and acts as a server in communication network 8 to permit access to overall data D over communication network 8.

The monitoring units are therefore substantially separate from data management and storage, thus simplifying the software implemented in their processors.

Moreover, information packages P are transmitted to collection computer 9 asynchronously at the sole discretion of the monitoring unit. If the monitoring unit is defined by user interface 7, this may decide independently the best time to transmit information packages P, and therefore also to collect data from control units 3, so as to avoid overloading control units 3.

The monitoring unit may transmit an information package P alongside significant changes in the operation of one or more machines 2, so that collection computer 9 is informed in substantially real time of any significant changes in the operation of production plant 1, while still maintaining a relatively low volume of traffic over communication network 8, if the monitoring unit is defined by user interface device 7, or over communication network 5, if the monitoring unit is defined by control unit 3.

Collection computer 9 is relatively powerful, and therefore expensive, by having to accommodate relatively heavy application software, such as SQL database 13 in the Server configuration and a Web Server. By installing collection computer 9 in office area 12, however, a standard machine can be used, which is much cheaper than the industrial type required in production area 11.

Conversely, installing collection computer 9 in production area 11 calls for an industrial machine, but allows the use of highly straightforward, low-cost user interface devices 7.

## Claims

1. Production plant for making and packing articles and comprising automatic making and packing machines (2), each of which has a relevant control unit (3) for controlling all the operating and monitoring devices of the automatic machine (2) to process and memorize data relative to operation of the automatic machine (2) as a whole; the production plant (1) further comprising a collection computer (9), a first communication network (5; 8) for connecting the control units (3) to the collection computer (9), and a second communication network (8) connected to the collection computer (9); the production plant (1) being **characterized in that** the collection computer (9) awaits receipt of information packages (P) transmitted independently and asynchronously by the control unit (3) over the first communication network (5; 8), the collection computer (9) processes and organizes the information packages (P) received from the control units (3) to generate overall data (D), and the collection computer (9) acts as a server in the second communication network (8) to permit access to said overall data (D) over the second communication network (8).

2. Production plant as claimed in Claim 1, wherein said information packages (P) are transmitted between the control unit (3) and the collection computer (9) according to a master/slave system in which the collection computer (9) is the slave, so that communication over said first communication network (5; 8) is one-way and originated exclusively by the control unit (3).

3. Production plant as claimed in Claim 1 or 2, wherein said second communication network (8) is an Ethernet network employing the TCP/IP protocol.

4. Production plant as claimed in Claim 1, wherein said collection computer (9) is configured to act on the second communication network (8) as a Web Server to transmit said overall data (D) upon request and according to the Internet/Intranet standard.

5. Production plant as claimed in one of Claims 1 to 4, wherein said first (5; 8) and said second (8) communication network coincide physically.

6. Production plant as claimed in one of Claims 1 to 5, wherein each said control unit (3) assigns each respective information package (P) a recognition code by which to recognize the automatic machine (2) supplying the information in the package, and to allow the collection computer (9) to determine unequivocally the origin of each information package (P).

7. Production plant as claimed in one of Claims 1 to 6, wherein said collection computer (9) reorganizes said information packages (P) for each automatic machine (2) and production complex to generate said overall data (D).

8. Production plant as claimed in one of Claims 1 to 7, wherein each said automatic machine (2) comprises a respective interface devices (7) connected to the relevant control units (3) by a third communication network (5).

9. Production plant as claimed in Claim 1, wherein said first (5; 8) and said second (8) communication network are physically separate with respect to said third communication network (5).

10. Production plant as claimed in Claim 8 or 9, wherein said third communication network (5) is an Ethernet network employing the TCP/IP protocol.

11. Production plant as claimed in one of Claims 1 to 10, wherein the date and time of said control unit (3) are synchronized centrally by said collection computer (9).

12. Production plant for making and packing articles and comprising a number of automatic machines (2), each of which has a respective control unit (3) for controlling all the operating and monitoring devices of the automatic machine (2) and operating according to its own management software and its own set of configuration parameters; the control units (3) being connected by a first communication network (5; 8) to a central collection computer (9); and the production plant (1) being **characterized in that** said collection computer (9) keeps, for each said control unit (3), an updated copy of the respective management software and respective set of configuration parameters; and said collection computer (9) is able to transfer its own copy of the relative management software and relative set of configuration parameters to each control unit (3).

13. Production plant as claimed in Claim 12, wherein each control unit (3) is able to communicate independently to said collection computer (9) any variation in its management software and/or set of configuration parameters.

14. Production plant as claimed in Claim 12 or 13, wherein said production plant (1) comprises at least one user interface device (7) connected to said collection computer (9) over said first communication network (5; 8) and operating according to its own management software, its own set of configuration parameters, and its own set of display elements; said collection computer (9) keeps, for said user interface device (7), an updated copy of the respective management software, respective set of configuration parameters, and respective set of display elements; and said collection computer (9) is able to transfer its own copy of the relative management software, relative set of configuration parameters, and relative set of display elements to said user interface device (7).

15. Production plant as claimed in Claim 12, 13 or 14, wherein said collection computer (9) can be connected over a second communication network (8) to a computer of the maker of the automatic machines (2) to receive telematically an updated version of said management software.

16. Production plant as claimed in Claim 15, wherein said second communication network (8) comprises an Internet network.

17. Production plant as claimed in Claim 15 or 16, wherein said collection computer (9) automatically updates the management software of each control unit (3) and each user interface device (7).

18. Production plant for making and packing articles and comprising automatic making and packing machines (2), each of which has a relevant control unit (3) for controlling all the operating and monitoring devices of the automatic machine (2) to process and memorize data relative to operation of the automatic machine (2) as a whole; the production plant (1) further comprising a collection computer (9), a first communication network (5; 8) for connecting the control units (3) to the collection computer (9) in order to communicate to the collection computer (9) data relative to their own operation; the production plant (1) being **characterized in** comprising at least one second communication network (8) used by the collection computer (9) to report important events to a given group of users by means of electronic mail messages.

19. Production plant as claimed in Claim 18, wherein said important events comprise routine maintenance and repairs to be carried out on said automatic machines (2).

20. Production plant as claimed in Claim 18 or 19, wherein said important events comprise machine stoppages caused by serious breakdowns.

21. Production plant as claimed in Claim 18, 19 or 20, wherein said important events comprise the need for spare parts; the electronic mail message requesting spare parts also being sent to the maker of the automatic machines (2).
